# EUROPÄISCHE PATENTSCHRIFT

(11) **EP 0 775 662 B1**
(45) Veröffentlichungstag und Bekanntmachung des Hinweises auf die Patenterteilung: **09.02.2000**
(21) Anmeldenummer: 96117919.9
(22) Anmeldetag: 08.11.1996
(51) Int. Cl.: B65H 75/36, H02G 1/08

(54) **Vorrichtung zum Aufnehmen und Abziehen eines biegeelastischen strangförmigen Materials**
Device for taking up and paying out a flexible elongate element
Dispositif pour enrouler et dérouler un élément flexible allongé

(30) Priorität: 24.11.1995 DE 29518697 U
(43) Veröffentlichungstag der Anmeldung: 28.05.1997
(73) Patentinhaber: Katimex-Cielker GmbH, 54584 Jünkerath (DE)
(72) Erfinder: Cielker, Werner, 54587 Birgel (DE)
(74) Vertreter: Wanischeck-Bergmann, Axel, Dipl.-Ing.

(56) Entgegenhaltungen:
- DE-U- 9 202 150
- US-A- 4 303 158
- US-A- 4 925 026
- US-A- 5 294 196

## Beschreibung

Die Erfindung betrifft eine Vorrichtung zum Aufnahmen und Abziehen eines biegeelastischen strangförmigen Materials, wie beispielsweise eines im Querschnitt kreisförmigen Schub- und Zugdraht, insbesondere aus Glasfaserkunststoff, vorzugsweise zum Einziehen von Kabeln, Lichtleitern oder sonstigen Leitungen in Kabel- oder Leitungsschutzrohre oder Leerrohre, mit einer Speichertrommel, in welcher das strangförmige Material in Windungen am Innenumfang anliegend angeordnet ist, und einem die Speichertrommel vorzugsweise vollständig umschließenden Gehäuse, welches eine Austrittsöffnung zum Herausziehen und Wiedereinschieben des strangförmigen Materials und zumindest einen Aufnahmeraum für Werkzeug, Werkstoffe und/oder Zubehör aufweist.

Derartige Vorrichtungen sind aus dem Stand der Technik bekannt. Beispielsweise offenbart die DE 92 02 150.6 U1 eine Vorrichtung zum Einziehen von Kabeln in Leerrohre, welche ein zweischaliges Gehäuse und eine in diesem Gehäuse gelagerte Trommel zur Aufnahme eines in Windungen am Innenumfang der Trommel anliegenden elastischen Schub- und Zugdrahtes aufweist, der durch einen aus Trommel und Gehäuse gebildeten Ringspalt aus der Trommel und eine Austrittsöffnung aus dem Gehäuse herausziehbar und wieder einschiebbar ist. Diese Vorrichtung ist mit zumindest einem Stauraum für Zubehör und/oder Werkzeug ausgebildet, wobei der Stauraum entweder im mittleren Teil des Gehäuses oder seitlich neben der Trommel im Gehäuse angeordnet ist. Bei dieser vorbekannten Vorrichtung hat es sich als nachteilig erwiesen, daß die in dem Stauraum angeordneten Gegenstände, beispielsweise auf den Schub- und Zugdraht aufschraubbare Endstücke, Kupplungseinrichtungen oder dergleichen in dem Stauraum ungeordnet aufbewahrt werden, so daß je nach Anzahl der Gegenstände der Stauraum vollständig entleert werden muß, um das gewünschte Zubehörteil herauszusuchen. Es mangelt somit an der Übersichtlichkeit der Anordnung des Zubehörs bzw. des Werkzeuges in diesem Stauraum.

Ausgehend von diesem Stand der Technik liegt der Erfindung die **Aufgabe** zugrunde, eine gattungsgemäße Vorrichtung derart weiterzubilden, daß die Werkzeuge und Werkstoffe sowie das Zubehör problemlos mitgeführt werden können, wobei diese Teile voneinander getrennt und möglichst unverlierbar in der Vorrichtung aufbewahrt werden und eine übersichtliche Anordnung dieser Teile gewährleistet ist.

Die **Lösung** dieser Aufgabenstellung sieht bei einer gattungsgemäßen Vorrichtung vor, daß der Aufnahmeraum durch Zwischenwandungen in mehrere Abschnitte unterteilt ist und daß die Zwischenwandungen sich im wesentlichen über die gesamte Tiefe des Aufnahmeraums erstrecken.

Durch diese Ausgestaltung wird insbesondere der Vorteil erzielt, daß die Zwischenwandungen den Aufnahmeraum in unterschiedliche Abschnitte unterteilen, wobei das Werkzeug, die Werkstoffe bzw. das Zubehör in unterschiedlichen Abschnitten angeordnet werden können und diese unterschiedlichen Teile beim Transport der Vorrichtung nicht in einen anderen Abschnitt gelangen. Somit ist bei der Handhabung dieser Vorrichtung eine wesentliche Verbesserung der Übersichtlichkeit der in dem Aufnahmeraum angeordneten Teile erzielt, so daß der Anwender einen schnellen Zugriff auf diese Teile hat.

Nach einem weiteren Merkmal der Erfindung ist vorgesehen, daß die Abschnitte entsprechend der Außenkontur der aufzunehmenden Werkzeuge, Werkstoffe und/oder des aufzunehmenden Zubehörs ausgebildet sind. Bei dieser Ausgestaltung werden die Werkzeuge, die Werkstoffe und/oder das Zubehör in entsprechende Ausnehmungen eingelegt, deren Kontur mit der Außenkontur dieser Teile übereinstimmt, so daß diese Teile an fest zugeordneten Plätzen angeordnet sind. Beispielsweise kann hierzu in den Aufnahmeraum ein Schaumstoffblock eingesetzt sein, der in seiner Oberfläche Aufnahmen für die Zubehörteile aufweist. Es ist aber auch denkbar, daß anstelle eines Schaumstoffblocks ein zähharter Kunststoff verwendet wird. Die Werkzeuge, Werkstoffe und/oder das Zubehör werden dann unverlierbar in dem Aufnahmeraum gehalten. Ferner wird hierdurch die Übersichtlichkeit der Anordnung dieser Teile, welche für einen schnellen Zugriff vorteilhaft sind, weiter verbessert.

Eine vorteilhafte Ausgestaltung sieht vor, daß die Werkzeuge, Werkstoffe und/oder das Zubehör klemmend in den Aufnahmen befestigbar sind, so daß diese sowohl beim Transport als auch bei der Anwendung der Vorrichtung unverrückbar und unverlierbar gehalten werden.

Es ist alternativ und/oder ergänzend vorgesehen, daß in den Aufnahmen Stifte angeordnet sind, auf welche eine Bohrung aufweisendes Zubehör und/oder Werkstoffe sowie Werkzeuge aufsteckbar sind, wobei die Zubehörteile bzw. die Werkstoffe oder die Werkzeuge vorzugsweise kraftschlüssig auf den Stiften befestigbar sind. Diese Ausgestaltung stellt eine zweite Möglichkeit dar, die mitzuführenden Teile lagegenau und übersichtlich in dem Aufnahmeraum anzuordnen.

Vorzugsweise ist der Aufnahmeraum im Zentrum des Gehäuses und/oder der Speichertrommel angeordnet.

Nach einem weiteren Merkmal der Erfindung ist vorgesehen, daß der Aufnahmeraum mit einem Verschluß oder einem Deckel abdeckbar ist, wobei vorzugsweise der Verschluß als auf eine Gewindestange aufschraubbare Kappe ausgebildet ist. Bei der Verwendung eines Deckels hat es sich als vorteilhaft erwiesen, diesen klappbar am Gehäuse anzuordnen, so daß der Deckel unverlierbar am Gehäuse befestigt ist.

Ein erleichterter Zugriff auf die in dem Aufnahmeraum angeordneten Zubehörteile wird dadurch erzielt, daß der Deckel in seiner geöffneten Stellung am Gehäuse verrastbar ist, so daß der Deckel in der geöffneten Stellung eine stabile Lage einnimmt, die dem Anwender beispielsweise auch einen beidhändigen Zugriff auf Zubehörteile ermöglicht, ohne daß die Gefahr besteht, daß der Deckel in die geschlossene Stellung fällt.

Es ist ferner bei einer erfindungsgemäßen Vorrichtung vorgesehen, daß der Aufnahmeraum als topfförmiger Einsatz ausgebildet ist, der vorzugsweise in eine korrespondierende Ausnehmung in der Speichertrommel einsetzbar ist. Diese Ausgestaltung hat beispielsweise den Vorteil, daß der als topfförmige Einsatz ausgebildete Aufnahmeraum bei der Produktion der erfindungsgemäßen Vorrichtung in einfacher Weise als zusätzliches Bauteil eingesetzt werden kann. Darüber hinaus ist es denkbar, daß unterschiedliche Aufnahmeräume für unterschiedliche Werkzeuge, Werkstoffe und Zubehörteile gegeneinander ausgetauscht werden können. Selbstverständlich ist es auch denkbar, daß der Aufnahmeraum nicht in der Speichertrommel, sondern im Gehäuse angeordnet ist.

Um ein sicheres Verschließen des mit einem Dekkel versehenen Aufnahmeraums zu ermöglichen, ist nach einem weiteren Merkmal vorgesehen, daß der Deckel ein mit dem Gehäuse und/oder der Speichertrommel verrastbares Schnappelement, vorzugsweise in Form eines Vorsprungs, hat. Wird der Deckel in die Schließstellung überführt, so schnappt dieser Vorsprung in eine korrespondierende Öffnung oder eine dementsprechend ausgebildete Ausnehmung ein, in welcher der Vorsprung formschlüssig, ggf. auch kraftschlüssig, gehalten wird.

Eine Weiterbildung dieser Ausgestaltung sieht vor, daß der Vorsprung als zumindest im Längsschnitt halbkreisförmig, vorzugsweise halbkugelförmige Nase ausgebildet ist, welche in eine korrespondierende Öffnung einschnappt.

Weitere Merkmale und Vorteile der Erfindung ergeben sich aus der nachfolgenden Beschreibung der zugehörigen Zeichnung, in der eine bevorzugte Ausführungsform der erfindungsgemäßen Vorrichtung dargestellt ist. In der Zeichnung zeigen:
- Figur 1:: Eine Vorrichtung zum Aufnehmen und Abziehen eines biegeelastischen strangförmigen Materials in einer perspektivischen Explosionsdarstellung sowie einer perspektivisch dargestellten Ansicht;
- Figur 2:: die Vorrichtung gemäß Figur 1 in einer Draufsicht und
- Figur 3:: eine Vorrichtung gemäß den Figuren 1 und 2 in einer geschnitten dargestellten Seitenansicht.

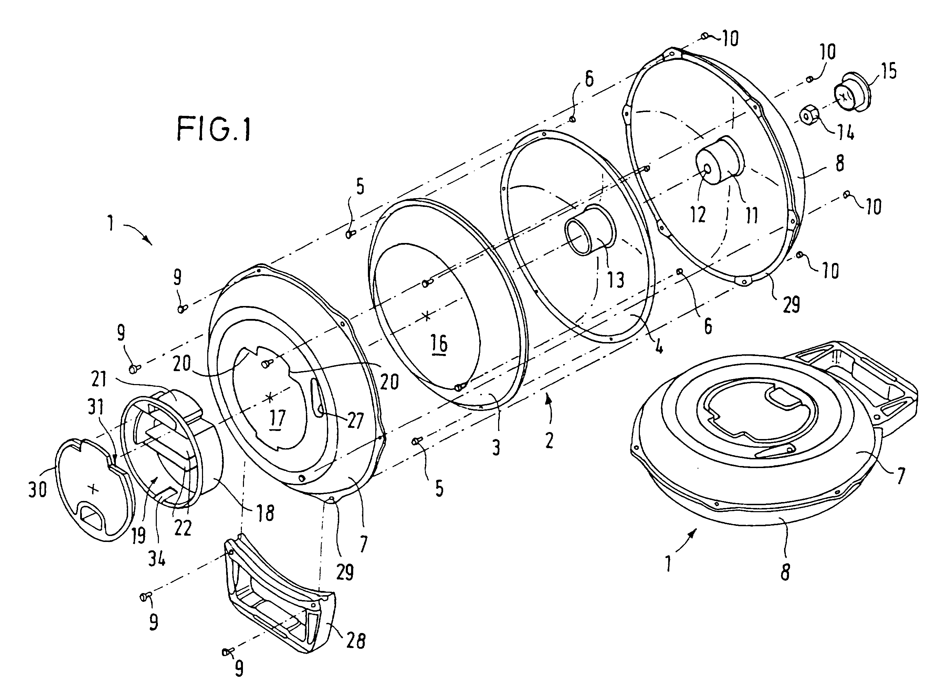

In der Figur 1 ist eine Vorrichtung 1 zum Aufnehmen und Abziehen eines nicht näher dargestellten biegeelastischen strangförmigen Materials, nämlich eines Schub- und Zugdrahtes aus Glasfaserkunststoff zum Einziehen von Kabeln, Lichtleitern oder dergleichen in Kabel- oder Leitungsschutzrohre oder Leerrohre dargestellt. Die Vorrichtung besteht aus einer Speichertrommel 2, welche durch zwei im Querschnitt kreisförmig ausgebildete Schalen 3 und 4 gebildet ist, die mittels Schraubbolzen 5 und Muttern 6 miteinander verschraubt sind. In der Speichertrommel 2 ist der Schub- und Zugdraht in Windungen am Innenumfang der Schalen 3 und 4 anliegend angeordnet.

Die Speichertrommel 2 ist innerhalb eines Gehäuses angeordnet, welches aus zwei Schalen 7 und 8 besteht, die mit Schraubbolzen 9 und Muttern 10 miteinander verschraubt sind. Die Speichertrommel 2 ist hierbei um die Mittelachse der beiden Schalen 7 und 8 drehbar in dem Gehäuse gelagert. Hierzu weist die Schale 8 an ihrer Innenfläche eine angeformte Achse 11 auf, die im wesentlichen hohlzylindrisch ausgebildet ist und im Bodenbereich eine Bohrung 12 zur Aufnahme eines Bolzens hat. Die Schale 4 der Speichertrommel 2 weist darüber hinaus einen in den inneren Raum der Speichertrommel 2 gerichteten und auf der Innenfläche der Schale 4 befestigen hohlzylindrischen Ansatz 13 auf, dessen Innendurchmesser dem Außendurchmesser der Achse 11 entspricht, so daß die Schale 4 drehbar auf der Achse 11 angeordnet werden kann.

Aus der Figur 1 ist ferner zu erkennen, daß eine außenseitig im Bereich der Achse 11 angeordnete Öffnung zur Aufnahme einer Mutter 14 dient, welche auf einen nicht dargestellten Schraubbolzen aufschraubbar ist, mit dem die Schale 4 der Speichertrommel 2 an der Schale 8 des Gehäuses befestigbar ist. Die die Mutter 14 aufnehmende Öffnung in der Schale 8 des Gehäuses wird mit einer Kappe 15 abgedeckt, wobei der die Mutter 14 aufnehmende Hohlraum in der Schale 8 des Gehäuses auch als Aufnahmeraum für Werkzeug, Werkstoffe und/oder Zubehör dienen kann.

Wie ferner aus der Figur 1 zu erkennen ist, weist die Schale 3 der Speichertrommel 2 eine der Schale 7 des Gehäuses zugewandte Öffnung 16 auf. Schließlich ist auch in der Schale 7 des Gehäuses eine zentrisch angeordnete Öffnung 17 vorhanden, in welche ein als topfförmiger Einsatz 18 ausgebildeter Aufnahmeraum 19 einsetzbar ist. Die Öffnung 17 ist hierzu im wesentlichen kreisförmig ausgebildet und weist zwei Vorsprünge 20 auf, die in den Innenraum der Öffnung 17 ragen und mit einem Vorsprung 21 zusammenwirken, der an der Umfangsfläche des Einsatzes 18 angeordnet ist. Durch die Vorsprünge 20 und 21 wird der Einsatz 18 lagegenau in der Schale 7 des Gehäuses gehalten.

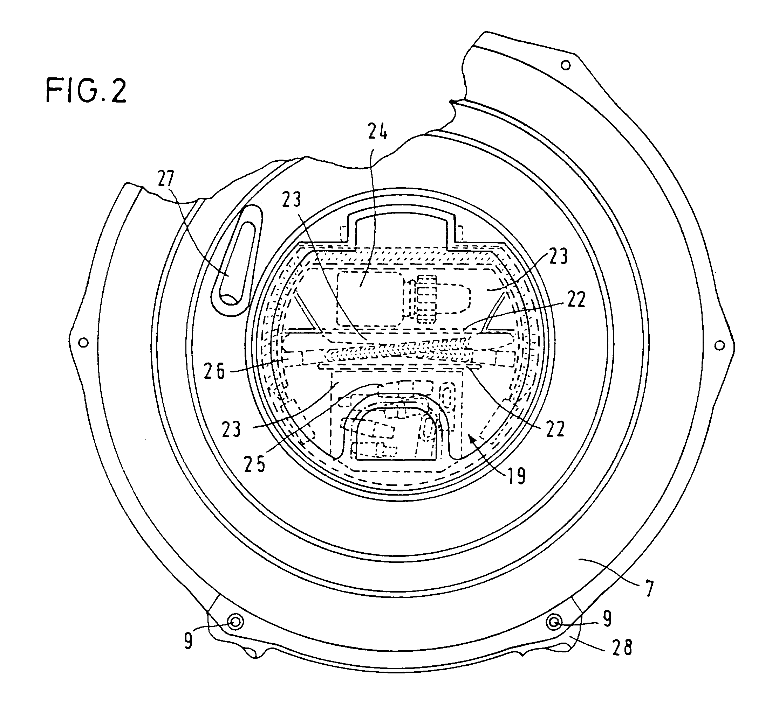

Im Aufnahmeraum 19 sind Zwischenwandungen 22 angeordnet, die den Aufnahmeraum 19 in mehrere Abschnitte 23 unterteilen, wobei jeder Abschnitt 23 des Aufnahmeraums 19 zur Aufnahme unterschiedlicher Werkzeuge, Werkstoffe und/oder Zubehör vorgesehen ist. In der Figur 2 ist beispielsweise zu erkennen, daß der obere Abschnitt 23 des Aufnahmeraums 19 der Aufnahme einer Kunststoffflasche 24 mit Gleitmittel dient. Der untere Abschnitt 23 ist demgegenüber mit verschiedenen Kupplungselementen 25 befüllt. Zwischen dem oberen Abschnitt 23 und dem unteren Abschnitt 23 ist ein weiterer Abschnitt 23 vorgesehen, in dem biegeelastische stabförmige Aufsatzelemente 26 angeordnet sind, die mit dem aus der Vorrichtung 1 herausragenden Ende des Schub- und Zugdrahtes verbindbar, insbesondere verschraubbar, sind.

Der Schub- und Zugdraht ist durch eine im Außenrandbereich der Kappe 7 des Gehäuses angeordnete Öffnung 27 geführt, durch welche der Schub- und Zugdraht in die Vorrichtung 1 einschiebbar und aus dieser herausziehbar ist.

Ferner weist die Vorrichtung 1 einen Handgriff 28 auf, der am Gehäuse der Vorrichtung 1 anschraubbar ist, wobei der Handgriff 28 einen Randbereich 29 der Schalen 7 und 8 übergreift.

Schließlich weist die Vorrichtung 1 noch einen Deckel 30 auf, mit dem der Aufnahmeraum 19 abdeckbar ist. Der Deckel 30 hat zwei kolinear angeordnete Steckachsen 31, die in korrespondierende Öffnungen im Einsatz 18 eingesteckt sind, so daß der Deckel 30 um die Steckachsen 31 relativ zum Einsatz 18 verschwenkbar ist. In seiner geöffneten Endstellung rastet der Deckel 30 ein, so daß zum Schließen des Deckels 30 ein erhöhter Kraftaufwand notwendig ist, mit dem der Deckel 30 aus seiner Raststellung gedrückt wird.

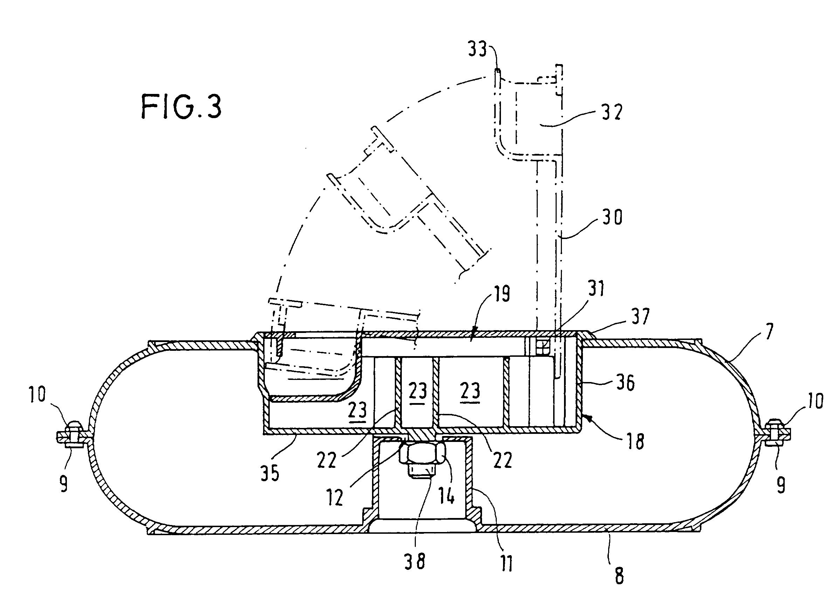

Aus der Figur 3 ist zu erkennen, daß der Deckel 30 eine als Fingeransatz dienende Eingrifföffnung 32 aufweist, die den Steckachsen 31 diametral gegenüberliegend angeordnet ist. Darüber hinaus ist zu erkennen, daß der Deckel 30 im Bereich der Eingrifföffnung 32 einen stegförmigen Vorsprung 33 hat, welcher mit einer Ausnehmung 34 an der Innenfläche des Aufnahmeraums 19 zusammenwirkt, nämlich dahingehend, daß einerseits der Deckel 30 im geschlossenen Zustand in der Ausnehmung 34 lagegerecht geführt ist und andererseits, daß zwischen dem Vorsprung 33 und der Ausnehmung 34 eine kraftschlüssige Verbindung besteht, die den Deckel 30 in seiner Schließstellung hält.

Insbesondere aus der Figur 3 ist die topfförmige Ausgestaltung des Einsatzes 18 zu erkennen. Der Einsatz 18 weist demzufolge einen Boden 35 und eine ringförmige Seitenwandung 36 auf, die an ihrem, dem Boden 35 gegenüberliegenden Ende, einen Ansatz 37 hat, welcher auf der Oberfläche der Schale 7 des Gehäuses aufliegt. Zur Vereinfachung ist in der Figur 3 die Speichertrommel 2, welche innerhalb des aus den Schalen 7 und 8 gebildeten Gehäuses angeordnet ist, nicht dargestellt.

Im Bereich des Bodens 35 weist der Einsatz 18 einen angeformten Bolzen 38 auf, der durch die Bohrung 12 im Boden der Achse 11 gesteckt und mit der Mutter 14 verschraubt ist. Somit ist der Einsatz 18 mit der Schale 8 des Gehäuses verbunden, so daß der Einsatz 18 unverlierbar im Gehäuse angeordnet ist.

In den Abschnitten 23 kann ferner ein nicht dargestelltes Element angeordnet sein, in welchem Ausnehmungen ausgebildet sind, deren Kontur mit der Außenkontur des aufzunehmenden Werkzeugs, Werkstücks oder Zubehörteils übereinstimmt. Beispielsweise kann dieses Element als Schaumstoff block ausgebildet sein. Es ist aber auch möglich, daß dieses Element aus einem zähhartem Kunststoff besteht, der bei seiner Herstellung in die entsprechende Form gegossen oder gezogen wird. Diese Ausgestaltung hat insbesondere den Vorteil, daß die aufzunehmenden Werkzeuge, Werkstücke oder Zubehörteile lagegenau in dem Aufnahmeraum 19 angeordnet werden, so daß einerseits der Anwender eine übersichtliche Anordnung der Werkzeuge, Werkstücke und Zubehörteile vorfindet und andererseits diese Teile derart in dem Aufnahmeraum 19 angeordnet sind, daß sie auch bei geöffnetem Deckel 30 nicht aus dem Aufnahmeraum 19 herausfallen. Zwischen dem Element und den voranstehend genannten Zubehörteilen besteht somit eine reibschlüssige Verbindung, die insbesondere durch die Formgebung der Aufnahmen und das gewählte Material für das Element erzielbar ist.

### Bezugszeichenliste

- 1: Vorrichtung
- 2: Speichertrommel
- 3: Schale
- 4: Schale
- 5: Schraubbolzen
- 6: Mutter
- 7: Schale
- 8: Schale
- 9: Schraubbolzen
- 10: Mutter
- 11: Achse
- 12: Bohrung
- 13: Ansatz
- 14: Mutter
- 15: Kappe
- 16: Öffnung
- 17: Öffnung
- 18: Einsatz
- 19: Aufnahmeraum
- 20: Vorsprung
- 21: Vorsprung
- 22: Zwischenwandung
- 23: Abschnitt
- 24: Kunststoffflasche
- 25: Kupplungselement
- 26: Aufsatzelement
- 27: Öffnung
- 28: Handgriff
- 29: Randbereich
- 30: Deckel
- 31: Steckachse
- 32: Eingrifföffnung
- 33: Vorsprung
- 34: Ausnehmung
- 35: Boden
- 36: Seitenwandung
- 37: Ansatz
- 38: Bolzen

## Patentansprüche

1. Vorrichtung zum Aufnehmen und Abziehen eines biegeelastischen strangförmigen Materials, wie beispielsweise eines im Querschnitt kreisförmigen Schub- und Zugdrahtes, insbesondere aus Glasfaserkunststoff, vorzugsweise zum Einziehen von Kabeln, Lichtleitern oder sonstigen Leitungen in Kabel- oder Leitungsschutzrohre oder Leerrohre, mit einer Speichertrommel (2) in welcher das strangförmige Material in Windungen am Innenumfang anliegend angeordnet ist, und einem die Speichertrommel (2) vorzugsweise vollständig umschließenden Gehäuse (7, 8), welches eine Austrittsöffnung (27) zum Herausziehen und Wiedereinschieben des strangförmigen Materials und zumindest einen Aufnahmeraum (19) für Werkzeug, Werkstoffe und/oder Zubehör aufweist,
**dadurch gekennzeichnet,** daß der Aufnahmeraum (19) durch Zwischenwandungen (22) in mehrere Abschnitte (23) unterteilt ist, und daß die Zwischenwandungen (22) sich im wesentlichen über die gesamte Tiefe des Aufnahmeraums (19) erstrecken.

2. Vorrichtung nach Anspruch 1,
**dadurch gekennzeichnet,** daß die Abschnitte (23) entsprechend der Außenkontur der aufzunehmenden Werkzeuge, Werkstoffe und/oder des aufzunehmenden Zubehörs ausgebildet sind.

3. Vorrichtung nach Anspruch 2,
**dadurch gekennzeichnet,** daß die Werkzeuge, Werkstoffe und/oder das Zubehör klemmend in den Abschnitten (23) befestigbar sind.

4. Vorrichtung nach Anspruch 1,
**dadurch gekennzeichnet,** daß in den Abschnitten (23) Stifte angeordnet sind, auf welche eine Bohrung aufweisendes Zubehör und/oder Werkstoffe aufsteckbar sind, wobei das Zubehör bzw. die Werkstoffe vorzugsweise kraftschlüssig auf den Stiften befestigbar sind.

5. Vorrichtung nach Anspruch 1,
**dadurch gekennzeichnet,** daß der Aufnahmeraum (19) im Zentrum des Gehäuses (7, 8) und/oder der Speichertrommel (2) angeordnet ist.

6. Vorrichtung nach Anspruch 1,
**dadurch gekennzeichnet**, daß der Aufnahmeraum (19) mit einem Verschluß oder einem Deckel (30) abdeckbar ist.

7. Vorrichtung nach Anspruch 6,
**dadurch gekennzeichnet**, daß der Verschluß als auf eine Gewindestange aufschraubbare Kappe ausgebildet ist.

8. Vorrichtung nach Anspruch 6,
**dadurch gekennzeichnet**, daß der Deckel (30) klappbar am Gehäuse (7, 9) angeordnet ist.

9. Vorrichtung nach Anspruch 6,
**dadurch gekennzeichnet**, daß der Deckel (30) in seiner geöffneten Stellung am Gehäuse (7, 9) verrastbar ist.

10. Vorrichtung nach Anspruch 1,
**dadurch gekennzeichnet**, daß der Aufnahmeraum (19) als topfförmiger Einsatz (18) ausgebildet ist, der vorzugsweise in eine korrespondierende Öffnung (17) in der Speichertrommel(2) und/oder des Gehäuses (7, 9) einsetzbar ist.

11. Vorrichtung nach Anspruch 6,
**dadurch gekennzeichnet**, daß der Deckel (30) ein mit dem Gehäuse (7, 9) und/oder der Speichertrommel (2) verrastbares Schnappelement, vorzugsweise in Form eines Vorsprungs (33) hat.

12. Vorrichtung nach Anspruch 11,
**dadurch gekennzeichnet**, daß der Vorsprung (33) als zumindest im Längsschnitt halbkreisförmige, vorzugsweise halbkugelförmige Nase ausgebildet ist, welche in eine korrespondierende Ausnehmung (34) einschnappt.

## Claims

1. Device for taking up and paying out a flexible rope-shaped material such as for example a push and pull wire having a circular cross-section and being made particularly of glass-fibre plastic, preferably for pulling cables, optical fibres or other leads into cable or line protection tubes or empty tubes, said device comprising a storage drum (2) in which said rope-shaped material is arranged to lie against the inner periphery thereof in windings, and a housing (7, 8) which preferably completely surrounds said storage drum (2) and has an exit opening (27) for pulling out and pushing back again said rope-shaped material, and at least one receiving space (19) for tools, materials and/or accessories, **characterized in** that the receiving space (19) is subdivisioned by means of intermediate walls (22) in plural sections (23), and that said intermediate walls (22) substantially extend over the entire depth of said receiving space (19).

2. Device according to claim 1, **characterized in** that the sections (23) are shaped so as to correspond to the outer contour of the tools, materials and/or accessories to be received.

3. Device according to claim 2, **characterized in** that the tools, materials and/or accessories are adapted to be fixed in said sections (23) by clamping.

4. Device according to claim 1, **characterized in** that pins are arranged in said sections (23) for plug-fitting accessories and/or materials provided with a bore, said accessories and/or materials being preferably adapted for non-positive fitting on said pins.

5. Device according to claim 1, **characterized in** that the receiving space (19) is arranged in the centre of the housing (7, 8) and/or the storage drum (2).

6. Device according to claim 1, **characterized in** that the receiving space (19) can be covered by means of a closure or a cover (30).

7. Device according to claim 6, **characterized in** that said closure is in the form of a cap adapted to be screw-fitted on a threaded rod.

8. Device according to claim 6, **characterized in** that the cover (30) is hinged to the housing (7, 8).

9. Device according to claim 6, **characterized in** that said cover (30) in its opened position can be locked to said housing.

10. Device according to claim 1, **characterized in** that the receiving space (19) is in the form of a pot-shaped insert (18) preferably adapted to be inserted in a corresponding opening (17) in the storage drum and/or of housing (7, 8).

11. Device according to claim 6, **characterized in** that the cover (30) has a snap member adapted to be interlocked with the housing (7, 8) or the storage drum (2), said snap member preferably being in the form of a projection (33).

12. Device according to claim 11, **characterized in** that said projection (33) is formed as nose which is semicircular at least in the longitudinal section and which preferably is semispherical, said nose snapping in a corresponding recess (34).

## Revendications

1. Dispositif pour enrouler et dérouler un matériau flexible allongé, comme par exemple un fil de poussée et de traction de section circulaire, en particulier en matière plastique renforcée par des fibres de verre, de préférence pour tirer des câbles, des guides de lumières ou d'autres conduites dans des gaines de protection de câbles ou de conduites, avec un tambour de stockage (2), dans lequel le matériau allongé est placé en adhérant à la périphérie intérieure en spires, et un bâti (7, 8) qui enferme le tambour de stockage (2) de préférence entièrement, qui présente un orifice de sortie (27) pour sortir et rentrer à nouveau le matériau allongé et au moins un espace de logement (19) pour des outils, des matériaux et/ou des accessoires,
caractérisé en ce
que l'espace de logement (19) est divisé par des parois intermédiaires (22) en plusieurs sections (23) et que les parois intermédiaires (22) s'étendent substantiellement sur toute la profondeur de l'espace de logement (19).

2. Dispositif selon la revendication 1,
caractérisé en ce
que les sections (23) sont configurées en correspondant aux contours extérieurs des outils, des matériaux à loger et/ou des accessoires à loger.

3. Dispositif selon la revendication 2,
caractérisé en ce
que les outils, matériaux et/ou les accessoires peuvent être fixés en étant coïncés dans les sections (23).

4. Dispositif selon la revendication 1,
caractérisé en ce
des broches sont placées dans les sections (23), broches sur lesquelles des accessoires et/ou matériaux qui présentent une perforation peuvent être emboîtés, les accessoires et/ou les matériaux pouvant être fixés sur les broches de préférence en adhérant par force.

5. Dispositif selon la revendication 1,
caractérisé en ce
que l'espace de logement (19) est placé au centre du bâti (7, 8) et/ou du tambour de stockage (2).

6. Dispositif selon la revendication 1,
caractérisé en ce
que l'espace de logement (19) peut être recouvert par une fermeture ou un couvercle (30).

7. Dispositif selon la revendication 6,
caractérisé en ce
que la fermeture est configurée comme un capuchon qui peut être vissé sur une tige filetée.

8. Dispositif selon la revendication 6,
caractérisé en ce
que le couvercle (30) est placé rabattable sur le bâti (7, 9).

9. Dispositif selon la revendication 6,
caractérisé en ce
que le couvercle (30) peut être bloqué dans sa position ouverte sur le bâti (7, 9).

10. Dispositif selon la revendication 1,
caractérisé en ce
que l'espace de logement (19) est configuré comme un insert en forme de pot (18) qui peut être, de préférence, mis en place dans une ouverture correspondante (17) dans le tambour de stockage (2) et/ou du bâti (7, 9).

11. Dispositif selon la revendication 6,
caractérisé en ce
que le couvercle (30) a un élément à cliquet, de préférence en forme d'épaulement, pouvant être bloqué avec le bâti (7, 9) et/ou le tambour de stockage (2).

12. Dispositif selon la revendication 11,
caractérisé en ce
que l'épaulement (33) est configuré au moins en coupe longitudinale comme une came en forme de demi-cercle, de préférence en forme hémisphérique, qui s'encliquète dans un évidemment correspondant (34).
